# EUROPÄISCHE PATENTANMELDUNG

(11) **EP 3 858 882 A1**
(43) Veröffentlichungstag der Anmeldung: **04.08.2021**
(21) Anmeldenummer: 20155126.4
(22) Anmeldetag: 03.02.2020
(51) Int. Cl.: C08G 18/24, C08G 18/28, C08G 18/42, C08G 18/62, C08G 18/79, C09D 175/06

(54) **BESCHICHTUNGSMITTELZUSAMMENSETZUNGEN ZUR BESCHICHTUNG VON SCHAUMSTOFFEN UND FASERVERSTÄRKTEN KOMPOSITMATERIALIEN IM IN-MOULD-VERFAHREN**

(71) Anmelder: BASF Coatings GmbH, 48165 Münster (DE)
(72) Erfinder: LI, Henan, 67061 Ludwigshafen (DE); WESTHOFF, Elke, 48565 Steinfurt (DE); FEDELER, Lea, 48565 Steinfurt (DE); DOPP, Andreas, 59387 Ascheberg (DE)
(74) Vertreter: Steffan & Kiehne Patentanwälte PartG mbB

(57) **Zusammenfassung**

Die Erfindung betrifft eine lösemittelbasierte Zweikomponenten-Beschichtungsmittelzusammensetzung, welche eine Stammlack-Komponente A umfasst, enthaltend A1 eine Poly(meth)acrylat-Komponente, die eines oder mehrere hydroxyfunktionelle Poly(meth)acrylate A1a mit einer Hydroxylzahl von 50 bis 120 mg KOH/g enthält; A2 eine Polyesterpolyol-Komponente, die eines oder mehrere aromatische, verzweigte Polyesterpolyole, mit einer Hydroxylzahl von 100 bis 200 mg KOH/g enthält; A3 eine oder mehrere Spezies der allgemeinen Formel R²-(C=O)ᵣ-O-(AO)ₛ-R³; A4 einen oder mehrere Vernetzungskatalysatoren gewählt aus der Gruppe der Organozinnverbindungen; A5 eines oder mehrere polyethermodifizierte Alkylpolysiloxane; und wobei die Zweikomponenten-Beschichtungsmittelzusammensetzung eine Härter-Komponente B umfasst, enthaltend B1 eines oder mehrere Polyisocyanate, welche im Mittel 2,4 bis 5 NCO-Gruppen aufweisen; wobei das molare Verhältnis der Summe der Hydroxylgruppen der Stammlack-Komponenten A1 und A2 zu den NCO-Gruppen der Härter-Komponente B von 1:3,5 bis 1:1,0 beträgt. Des Weiteren betrifft die Erfindung Verfahren zur Herstellung von mit der Zweikomponenten-Beschichtungsmittelzusammensetzung beschichteter faserverstärkter Kunststoffe und Schaumstoffe sowie die Verwendung der Zweikomponenten-Beschichtungsmittelzusammensetzungen zu diesem Zweck. Ferner betrifft die Erfindung eine Zusammensetzung, die im Wesentlichen die Spezies A3 und A5 umfasst und deren Verwendung als Entformungsmittel oder Entformungsadditiv.

## Beschreibung

Die vorliegende Erfindung betrifft Zweikomponenten-Beschichtungsmittelzusammensetzungen zur Beschichtung von Schaumstoffen sowie faserverstärkten Komposit- und Kunststoffmaterialien, die insbesondere für das In-Mold-Beschichtungsverfahren geeignet sind, ein Verfahren zur Beschichtung derartiger Materialien sowie die Verwendung der Zweikomponenten-Beschichtungsmittelzusammensetzungen zur Herstellung von beschichteten Schaumstoffen sowie beschichteten faserverstärkten Komposit- und Kunststoffmaterialien, insbesondere im Mehrschichtbeschichtungsverfahren.

Es besteht ein anhaltender Bedarf an Materialien die eine Gewichtsreduzierung von Fahrzeugkarosserien und deren Teilen erlauben, insbesondere zum Zwecke der Verringerung des Kraftstoffbedarfs und somit des Kohlendioxidausstoßes. Außerdem müssen die Materialien gut formbar sein und somit eine maximale Konstruktionsfreiheit ermöglichen. Geeignete Substrate des Standes der Technik, die bereits eine gewisse Gewichtsreduktion ermögliche sind beispielsweise Aluminium und Hochleistungsstahle. Zunehmend geraten jedoch auch Materialien wie Schaumstoffe sowie faserverstärkte Kompositmaterialien beziehungsweise faserverstärkte Kunststoffe in den Fokus der Konstrukteure. Schaumstoffe wie Hartschäume und Weichschäume, insbesondere wie sie im Automobilinnenbereich beispielsweise im Ausstattungs-, Polster- und Dämmbereich eingesetzt werden, bedürfen hochwertiger Oberflächenbeschichtungen, welche zugleich eine Barrierefunktion übernehmen sollen. Faserverstärkte Kompositmaterialien beziehungsweise faserverstärkte Kunststoffe spielen insbesondere im Bereich des Kraftfahrzeugdaches, der Motorhaube, den Kraftfahrzeugtüren und der Heckteile eine Rolle. Eine Herausforderung beim Einsatz dieser Materialien ist jedoch, dass diese nicht in der Lackierlinie beschichtet werden können und dennoch eine hervorragende Oberflächenqualität nach einer Beschichtung aufweisen müssen (Class-A-Oberfläche).

Faserverstärkte Kompositmaterialien beziehungsweise faserverstärkte Kunststoffe, aber auch Schaumstoffe weisen jedoch zumeist eine unregelmäßige Oberflächenstruktur auf, die zumeist rau ist und auch teilweise offene Fasern oder Poren aufweist und deren Unregelmäßigkeit sich nach einer Beschichtung durch die Beschichtungsschichten, in der Regel Füllerschichten, Basislackschichten und Klarlackschichten bis zur Lackoberfläche fortpflanzt. Bei faserverstärkten Materialien kann die Fortpflanzung der Strukturierung der Substratoberfläche bis zur Oberfläche der obersten Beschichtungsmittelschicht auf verschiedene thermische Ausdehnungskoeffizienten der Fasern im faserverstärkten Material und der diese umgebende Kunststoffmatrix zurückgeführt werden. Gerade bei Sichtbauteilen im Bereich der Fahrzeugkarosserien stellt dies ein großes Problem dar.

Auf dem Markt befindlich sind bereits Kraftfahrzeuge, welche eine Karosserie in Ganzschalenbauweise auf Basis eines carbonfaserverstärkten Kompositmaterials aufweisen und die über eine Class-A-Oberfläche verfügen. Die Mehrschichtbeschichtung wird jedoch in einer technisch sehr aufwändigen Beschichtungsarchitektur mit jeweils mehreren Füller-, Basis- und Klarlackschichten, mehreren Zwischenschleifschritten und einem finalen Polierschritt realisiert.

Es besteht somit ein Bestreben ein einfaches Beschichtungsverfahren insbesondere für faserverstärkte Kompositmaterialien beziehungsweise faserverstärkte Kunststoffe, aber auch Schaumstoffe bereitzustellen, bei welchem die Vielzahl von Zwischenschichten, vor der finalen Beschichtung mit einer Basislackschicht und einer Klarlackschicht, durch möglichst eine Beschichtungsmittelschicht zu ersetzen, die eine Fortpflanzung der unregelmäßigen Substratoberfläche wirksam verhindert, ohne Füller auf dem Substrat hervorragend haftet und sich ohne aufwändige Reinigungs- und/oder Schleifschritte mit handelsüblichen Basislacken und Klarlacken nachbeschichten und/oder unter Verwendung von Klebstoffen verkleben lässt.

Mögliche Verfahren, mit welchen variable Schichtdicken erzeugt werden können sind das Overmolding-Verfahren (Injektions-In-Mold-Beschichtungsverfahren) oder das konventionelle In-Mold-Beschichtungsverfahren.

Beim konventionellen In-Mold-Beschichtungsverfahren wird eine Werkzeugoberfläche im Spritz- oder Sprühauftrag mit dem Beschichtungsmittel beschichtet und anschließend wird das faserverstärkte Kompositmaterialsubstrat beziehungsweise das faserverstärkte Kunststoffsubstrat auf das nicht oder noch nicht vollständig gehärtete Beschichtungsmittel aufgebracht oder ein Schaumstoff auf dieses aufgeschäumt. Beim In-Mold-Verfahren unterscheidet man zwischen offenen und geschlossenen Verfahren. Beim offenen Verfahren erfolgt die Lackierung wie auch die Applikation des Verstärkungsmaterials in einem nicht geschlossenen Werkzeug, während bei geschlossenen Verfahren das Werkzeug nach erfolgter Applikation der Lackschicht geschlossen wird, bevor anschließend das Verstärkungsmaterial eingegossen beziehungsweise durch Injektion eingespritzt wird und im Falle der Schaumstoffe geschäumt wird.

Beim Overmolding-Verfahren wird die Beschichtungsmittelzusammensetzung in einen Spalt zwischen Substrat und Werkzeugoberfläche injiziert. Ein Ablüften oder Vortrocknen des Beschichtungsmittels ist bei diesem Verfahren nicht möglich, weshalb nur Beschichtungsmittel eingesetzt werden können, die frei oder nahezu frei von flüchtigen Bestandteilen sind. Lösemittel, die mit anderen Bestandteilen des Beschichtungsmittels reagieren können, sogenannte Reaktivverdünner, können jedoch auch im Overmolding-Verfahren eingesetzt werden. Man spricht in einem solchen Fall von lösemittelfreien Beschichtungsmitteln oder Beschichtungsmittelsystemen mit 100 % Festkörper. In der Praxis können derartige Systeme jedoch auch sehr geringe Mengen an flüchtigen organischen Lösemitteln enthalten, die dann in der Regel über in Lösemitteln vorgelöste Additive in die Rezeptur gelangen. Durch die Spaltbreite zwischen Substrat und Werkzeugoberfläche kann beim Overmolding-Verfahren die Schichtdicke der Beschichtungsmittelschicht sehr exakt vorgegeben werden.

Bei allen Verfahren, bei welchen das Beschichtungsmittel mit einer Werkzeugoberfläche in Kontakt ist, bedarf es jedoch auch einer oberflächenbeschädigungsfreien Entformung der Beschichtung von der Werkzeugoberfläche. Diese kann konventionell erreicht werden, indem die Werkzeugoberfläche vor Gebrauch mit einem sogenannten externen Entformungs- beziehungsweise Trennmittel versehen wird. Bei Verwendung eines Entformungs- oder Trennmittels verbleibt dieses nach der Beschichtung des Substrats mit dem Beschichtungsmittel jedoch teilweise an der Werkzeugoberfläche, aber auch an der Beschichtungsmitteloberfläche. Vor einer Nachbeschichtung mit beispielsweise einem Basislack, muss dieses durch ein aufwändiges Reinigungsverfahren entfernt werden.

Eine der Aufgaben der vorliegenden Erfindung war es daher, ein Beschichtungsmittel bereitzustellen, welches ohne Einsatz eines solchen externen Trennmittels eine beschädigungsfreie Entformung von der üblicherweise metallischen Werkzeugoberfläche zulässt, trotzdem eine hervorragende Haftung auf dem Substrat gewährleistet und sich ohne aufwändige anschließende Reinigungsschritte und/oder Schleifschritte mit einer weiteren Lackschicht, beispielsweise einem Basislack und Klarlack, vorzugsweise unter Ausbildung einer Class-A-Oberfläche nachbeschichten lässt. Insbesondere sollen auch Schaumstoffe oder andere Materialien mit poröser Oberfläche nahtlos mit hochelastischen Überzügen versehen werden können, die zudem UV-beständig sind.

Vorgenannte Aufgaben wurden überraschenderweise durch Bereitstellung einer lösemittelbasierten Zweikomponenten-Beschichtungsmittelzusammensetzung gelöst, welche eine Stammlack-Komponente A umfasst, enthaltend
- A1: eine Poly(meth)acrylat-Komponente, die eines oder mehrere hydroxyfunktionelle Poly(meth)acrylate A1a mit einer Hydroxylzahl von 50 bis 120 mg KOH/g enthält;
- A2: eine Polyesterpolyol-Komponente, die eines oder mehrere aromatische, verzweigte Polyesterpolyole A2a mit einer Hydroxylzahl von 100 bis 200 mg KOH/g enthält;
- A3: eine oder mehrere Spezies der allgemeinen Formel (I)

R²-(C=O)ᵣ-O-(AO)ₛ-R³ (I)

enthält,
worin R² ein gesättigter oder ungesättigter, aliphatischer Kohlenwasserstoffrest mit 6 bis 30 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30 ist;
- A4: einen oder mehrere Vernetzungskatalysatoren A4a gewählt aus der Gruppe der Organozinnverbindungen enthält,
- A5: eines oder mehrere polyethermodifizierte Alkylpolysiloxane A5;
und wobei die Zweikomponenten-Beschichtungsmittelzusammensetzung Härter-Komponente B umfasst, enthaltend
- B1: eines oder mehrere Polyisocyanate, welche im Mittel 2,4 bis 5 NCO-Gruppen aufweisen; und
wobei das molare Verhältnis der Summe der Hydroxylgruppen der Stammlack-Komponenten A1 und A2 zu den NCO-Gruppen der Härter-Komponente B von 1:3,5 bis 1:1,0, vorzugsweise 1:3,0 bis 1:1,1 und besonders bevorzugt 1:2,5 bis 1:1,2 beträgt.

Der Begriff "Zweikomponenten-Beschichtungsmittelzusammensetzung" bezeichnet Beschichtungsstoffe, bei denen die Reaktion, die zur Härtung führt, durch Mischen von mindestens zwei Komponenten (Stammlack und Härter), in einem vorgegebenen Verhältnis, eingeleitet wird. Die einzelnen Komponenten sind keine Beschichtungsstoffe, da sie entweder nicht zur Filmbildung befähigt sind oder keine beständigen Filme ergeben.

Der Begriff "(Meth)acrylat" umfasst sowohl Acrylat als auch Methacrylat. Poly(meth)acrylate können daher aus Acrylaten und/oder Methacrylaten aufgebaut sein und weitere ethylenisch ungesättigte Monomere enthalten wie beispielsweise Styren und (Meth)acrylsäure.

Der Begriff "aliphatischer Rest" steht hierin für einen Rest, der keine aromatischen Strukturen enthält.

Der Begriff "aliphatisch" im Zusammenhang mit einer Substanz, beispielsweise einem Polymer, bedeutet, dass diese Substanz keine aromatischen Strukturen enthält.

Der Begriff "aromatisch" bedeutet im Zusammenhang mit den Komponenten A1 und A2 bzw. der darin enthaltenen Poly(meth)acrylate und Polyesterpolyole, dass diese mindestens eine Art eines aromatischen Monomers, gegebenenfalls neben aliphatischen Monomeren, enthalten.

Der Begriff "Kohlenwasserstoffrest" steht hierin für Reste, die ausschließlich Kohlenstoffatome und Wasserstoffatome enthalten, es sei denn es wird angegeben, dass dieser Rest zusätzlich bestimmte andere Gruppen oder Atome enthalten darf.

### Lösemittelbasierte Zweikomponenten-Beschichtungsmittelzusammensetzung

Die im Folgenden näher beschriebenen Bestandteile der Stammlack-Komponente A und Härter-Komponente B, insbesondere auch die gegebenenfalls unterschiedlich stark bevorzugten Bestandteile, lassen sich generell unabhängig voneinander wählen, so dass beispielsweise die Auswahl eines ganz besonders bevorzugten Bestandteils nicht bedingt, dass dieser nur mit anderen bevorzugten, besonders bevorzugten oder ganz besonders bevorzugten Bestandteilen kombinierbar ist. Dem steht nicht entgegen, dass es besonders sinnvoll und bevorzugt ist, bei der Verwendung eines bestimmten bevorzugten Bestandteils auch einen anderen bevorzugten Bestandteil zu wählen. Werden daher im Folgenden bevorzugte Kombinationen beschrieben, so sind diese allerdings nicht als zwingende Kombinationen zu verstehen, sondern lediglich als besonders bevorzugte Ausführungsform.

Die Zweikomponenten-Beschichtungsmittelzusammensetzung besitzt nach Mischen der Stammlack-Komponente A und der Härter-Komponente B, vor der optionalen Zugabe weiterer Lösemittel als Verdünner, einen Festkörper von vorzugsweise 50 bis 80 Gew.-% bezogen auf das Gesamtgewicht der Zweikomponenten-Beschichtungsmittelzusammensetzung gemäß ASTM D2369 (2015). Die optionale Zugabe weiterer Lösemittel als Verdünner dient typischerweise der Einstellung der Applikationsviskosität.

Der Gehalt des Festkörpers wird gemäß ASTM D2369 (aus dem Jahr 2015) bei 110 °C für 60 min an einer Probe von etwa 2 Gramm der Zweikomponenten-Beschichtungsmittelzusammensetzung bestimmt. Dieses Verfahren wird auch angewandt, um den Festkörper der Stammlack-Komponente A und der Härter-Komponente B sowie der in diesen Komponenten oder weiteren Komponenten eingesetzten Lackbestandteile zu bestimmen.

### Bestandteile der Stammlack-Komponente A

### Poly(meth)acrylat-Komponente A1

Die Poly(meth)acrylate-Komponente A1 enthält zwingend die hydroxyfunktionellen Poly(meth)acrylate A1a. Daneben können jedoch optional auch weitere Poly(meth)acrylate enthalten sein, worunter insbesondere die weiter unten beschriebenen hydroxyfunktionellen Poly(meth)acrylate A1b bevorzugt sind.

Vorzugsweise besteht die Poly(meth)acrylat-Komponente A1 ausschließlich aus Poly(meth)acrylaten. In der Praxis kann die Poly(meth)acrylat-Komponente A1 Lösemittel wie insbesondere Butylacetat oder nach der Polymerisation nicht abgetrennte Polymerisationshilfsstoffe wie Polymerisationsinitiatoren enthalten.

Solche Bestandteile werden jedoch hierin dem Gesamtlösemittelgehalt bzw. den Additiven der Stammlack-Komponente A oder der finalen lösemittelbasierten Zweikomponenten-Beschichtungsmittelzusammensetzung gewichtsanteilig zugerechnet.

### Hydroxvfunktionelle Poly(meth)acrylate A1a

Die hydroxyfunktionellen Poly(meth)acrylate A1a besitzen eine Hydroxylzahl von 50 bis 120 mg KOH/g. Vorzugsweise besitzen die hydroxyfunktionellen Poly(meth)acrylate A1a eine Hydroxylzahl von 65 bis 100 mg KOH/g, besonders bevorzugt 70 bis 90 mg KOH/g.

Die Hydroxylzahl der hydroxyfunktionellen Poly(meth)acrylate der Poly(meth)acrylat-Komponente A1 sowie aller anderen Polymere lässt sich im Rahmen der vorliegenden Erfindung gemäß DIN EN ISO 4629-2:2016-12 bestimmen.

Besonders bevorzugte Poly(meth)acrylate A1 sind vorzugsweise Copolymerisate aus (a) einem oder mehreren einfach ungesättigten (Meth)acrylsäureester-Monomeren, (b) einem oder mehreren einfach ethylenisch ungesättigten aromatischen Monomeren und (c) Acrylsäure und/oder Methacrylsäure, wobei ein Teil der (a) (Meth)acrylsäureester-Monomere Hydroxylgruppen trägt.

Typische und bevorzugte Monomere (a), die keine Hydroxylgruppen tragen sind beispielsweise (C₁₋₈-Alkyl)acrylate und (C₁₋₈-Alkyl)methacrylate, insbesondere (C₁₋₄-Alkyl)acrylate und (C₁₋₄-Alkyl)methacrylate wie Methyl-, Ethyl-, Propyl- und Butyl-(Meth)acrylate. Besonders bevorzugt werden als derartige Monomere (a) die Methylester und Butylester, insbesondere n-Butylester der (Meth)acrylsäure eingesetzt.

Die Monomere (a), die Hydroxylgruppen tragen, enthalten vorzugsweise genau eine Hydroxylgruppe pro Monomer. Die Hydroxylgruppen können als primäre oder sekundäre Hydroxylgruppen vorliegen. Vorzugsweise handelt es sich bei den Hydroxylgruppen tragenden Monomeren (a) um Hydroxyalkyl(meth)acrylate, wie beispielsweise Hydroxy(C₁₋₄-alkyl)acrylate und/oder Hydroxy(C₁₋₄-alkyl)methacrylate. Unter diesen sind besonders bevorzugt Hydroxy(C₁₋₄-alkyl)(meth)acrylate wie beispielsweise Hydroxyethyl(meth)acrylat, Hydroxypropyl(meth)acrylat oder Hydroxybutyl(meth)acrylat.

Als Monomere (b) werden einfach ethylenisch ungesättigte aromatische Monomere eingesetzt. Hierbei ist die ethylenisch ungesättigte Gruppe vorzugsweise direkt an den aromatischen Rest gebunden. Als Monomere (b) werden vorzugsweise solche der allgemeinen Formel Ar-CR¹=CR²R³ eingesetzt, wobei Ar für einen Aryl-Rest oder Heteroaryl-Rest mit vorzugsweise 5 bis 10 Kohlenstoffatomen steht. Die Reste R¹, R² und R³ können gleich oder verschieden voneinander sein und stehen unabhängig voneinander für Wasserstoff oder lineare oder verzweigte Alkylgruppen mit vorzugsweise 1 bis 6, besonders bevorzugt 1 bis 4 Kohlenstoffatomen. Ganz besonders bevorzugt stehen die Reste R¹, R² und R³ für Wasserstoff und Ar für einen substituierten oder unsubstituierten Phenyl-Rest. Als Monomer (b) besonders bevorzugt ist Styren.

Das zahlenmittlere Molekulargewicht der Poly(meth)acrylate A1a liegt vorzugsweise im Bereich von 4000 bis 10000 g/mol, besonders bevorzugt 5000 bis 9000 g/mol ganz besonders bevorzugt 5500 bis 8000 g/mol. Das gewichtsmittlere Molekulargewicht der Poly(meth)acrylate A1a liegt vorzugsweise im Bereich von 8000 bis 25000 g/mol, besonders bevorzugt 10000 bis 22000 g/mol ganz besonders bevorzugt 13000 bis 21000 g/mol.

Das zahlenmittlere und gewichtsmittlere Molekulargewicht aller Polymere wird im Rahmen der vorliegenden Erfindung durch Gelpermeationschromatographie (GPC) unter Verwendung eines Polystyrolstandards gemäß DIN 55672-1 (August 2007) bestimmt.

### Hydroxyfunktionelle Poly(meth)acrylate A1b

Die hydroxyfunktionellen Poly(meth)acrylate A1b sind von den hydroxyfunktionellen Poly(meth)acrylaten A1a verschieden und besitzen eine Hydroxylzahl von vorzugsweise 30 bis 90, besonders bevorzugt von 40 bis 80 mg KOH/g, und ganz besonders bevorzugt von 55 bis 75 mg KOH/g.

Die Hydroxylzahl lässt sich wie oben angegeben bestimmen.

Werden hydroxyfunktionelle Poly(meth)acrylate A1b eingesetzt, so ist deren Hydroxylzahl vorzugsweise niedriger als die Hydroxylzahl der hydroxyfunktionellen Poly(meth)acrylate A1a.

Durch den Einsatz der hydroxyfunktionellen Poly(meth)acrylate A1b lässt sich die Trocknungszeit der erfindungsgemäßen Zweikomponenten-Beschichtungsmittelzusammensetzung verkürzen.

### Polyesterpolyol-Komponente A2

Die Polyesterpolyol-Komponente A2 enthält zwingend mindestens ein Polyesterpolyol A2a. Daneben können jedoch optional auch weitere Polyesterpolyole enthalten sein, worunter insbesondere die von diesen verschiedenen, weiter unten beschriebenen aliphatischen Polyesterpolyole A2b und A2c bevorzugt sind.

Vorzugsweise besteht die Polyesterpolyol-Komponente A2 ausschließlich aus Polyesterpolyolen. In der Praxis kann die Polyesterpolyol-Komponente A2 Lösemittel wie beispielsweise Butylacetat oder nach der Polykondensation nicht abgetrennte Polymerisationshilfsstoffe wie Katalysatoren enthalten. Solche Bestandteile werden jedoch hierin dem Gesamtlösemittelgehalt bzw. den Additiven der Stammlack-Komponente A oder der finalen lösemittelbasierten Zweikomponenten-Beschichtungsmittelzusammensetzung gewichtsanteilig zugerechnet.

### Polvesterpolvole A2a

Die erfindungsgemäßen Beschichtungsmittelzusammensetzungen enthalten eines oder mehrere aromatische, verzweigte Polyesterpolyole A2a mit einer Hydroxylzahl von 100 bis 200 mg KOH/g.

Vorzugsweise besitzen die Polyesterpolyole A2a eine Hydroxylzahl von 110 bis 180 mg KOH/g, besonders bevorzugt 120 bis 160 mg KOH/g.

Die Hydroxylzahl der Polyesterpolyole der Polyesterpolyol-Komponente A2 lässt sich im Rahmen der vorliegenden Erfindung wie oben angegeben bestimmen.

Die Polyesterpolyole A2a besitzen vorzugsweise eine Säurezahl von 0 bis 10, besonders bevorzugt kleiner 5 und ganz besonders bevorzugt kleiner 3 mg KOH/g.

Die Säurezahl der Polyesterpolyole der Polyesterpolyol-Komponente A2 lässt sich im Rahmen der vorliegenden Erfindung gemäß DIN EN ISO 2114:2002-06 bestimmen.

Das zahlenmittlere Molekulargewicht der Polyesterpolyole A2a liegt vorzugsweise im Bereich von 800 bis 3000 g/mol, besonders bevorzugt 1200 bis 2200 g/mol ganz besonders bevorzugt 1300 bis 1900 g/mol.

Das zahlenmittlere Molekulargewicht wird im Rahmen der vorliegenden Erfindung durch Gelpermeationschromatographie wie oben angegeben bestimmt.

Besonders bevorzugte Polyesterpolyole A2a sind aus aliphatischen, cycloaliphatischen und aromatischen Di- bzw. Polycarbonsäuren bzw. ihren Anhydriden durch Umsetzung mit mehrwertigen Alkoholen einer OH-Funktionalität ≥ 2 erhältlich. Unter diesen sind besonders schwach verzweigte Polyesterpolyole A2a bevorzugt.

Beispiele der zur Herstellung der Polyester besonders geeigneten Di- bzw. Polycarbonsäuren sind Bernsteinsäure, Glutarsäure, Adipinsäure, Pimelinsäure, Korksäure, Azelainsäure, Sebacinsäure, Nonandicarbonsäure, Decandicarbonsäure, Terephthalsäure, Isophthalsäure, o-Phthalsäure, Tetrahydrophthalsäure, Hexahydrophthalsäure oder Trimellitsäure. Besonders geeignete Säureanhydride sind beispielsweise o-Phthalanhydrid, Trimellitanhydrid oder Bernsteinsäureanhydrid oder Mischungen daraus. Besonders bevorzugt werden die Dicarbonsäuren Adipinsäure, o-Phthalsäure und Isophthalsäure oder deren entsprechende Anhydride verwendet.

Besonders zur Herstellung der Polyester geeignete Alkohole sind beispielsweise Ethandiol, Diethylenglykol, Triethylenglykol, Tetraethylenglykol, 1,2-Propandiol, Dipropylenglykol, Tripropylenglykol, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Pentyerythrit, Glycerin oder Mischungen daraus.

Bevorzugt werden Propylenglykol-1,2, Butandiol-1,4, Hexandiol-1,6, Diethylenglykol, Triethylenglykol, 2,2-Dimethyl-1,3-propandiol, Trimethylolpropan, Pentaerythrit, Glycerin oder Mischungen verwendet, und ganz besonders bevorzugt 1,4-Butandiol, 1,6-Hexandiol und Trimethylolpropan.

Ganz besonders bevorzugt werden die Polyesterpolyole A2a aus Adipinsäure, Isophthalsäure, Phthalsäureanydrid, 1,6-Hexandiol und Trimethylolpropan hergestellt.

Bevorzugt besitzen die Polyesterpolyole A2a eine Hydroxyfunktionalität von 2,2 bis 4,5, besonders bevorzugt von 2,5 bis 4,0, ganz besonders bevorzugt von 2,7 bis 3,5.

Durch den Einsatz der Polyesterpolyole A2a erhöht sich die Elastizität des gehärteten erfindungsgemäßen Zweikomponenten-Beschichtungsmittels und die Haftung zwischen diesem und der zu beschichtenden Oberfläche.

### Polvesterpolvole A2b

Optional können eines oder mehrere lineare, aliphatische Polyesterpolyole A2b mit einer Hydroxylzahl von vorzugsweise 10 bis 80 mg KOH/g in den erfindungsgemäßen Zweikomponenten-Beschichtungsmittelsystemen enthalten sein.

Die Hydroxylzahl der Polyesterpolyole A2b beträgt besonders bevorzugt 20 bis 70 mg KOH/g und ganz besonders bevorzugt 30 bis 60 mg KOH/g.

Die Polyesterpolyole A2b besitzen vorzugsweise eine Säurezahl von 0 bis 5, besonders bevorzugt kleiner 3 und ganz besonders bevorzugt kleiner 2 mg KOH/g.

Besonders bevorzugt sind die Polyesterpolyole A2b lineare Polyesterdiole mit einer Hydroxylzahl und Säurezahl, die in den vorgenannten Bereichen liegt.

Durch den Einsatz der Polyesterpolyole A2b erhöht sich die Elastizität des gehärteten erfindungsgemäßen Zweikomponenten-Beschichtungsmittels weiter und die Haftung zwischen diesem und der zu beschichtenden Oberfläche verbessert sich.

### Polyesterpolyole A2c

Optional können eines oder mehrere verzweigte, aliphatische Polyesterpolyole A2c mit einer Hydroxylzahl von vorzugsweise größer >200 bis 280 mg KOH/g in den erfindungsgemäßen Zweikomponenten-Beschichtungsmittelsystemen enthalten sein. Die Hydroxylzahl der Polyesterpolyole A2c beträgt besonders bevorzugt >200 bis 250 mg KOH/g und ganz besonders bevorzugt >200 bis 240 mg KOH/g.

Bevorzugte Polyesterpolyole A2c sind aus aliphatischen oder cycloaliphatischen Di- bzw. Polycarbonsäuren bzw. ihren Anhydriden durch Umsetzung mit mehrwertigen Alkoholen einer OH-Funktionalität ≥ 2 erhältlich. Die entsprechenden aliphatischen oder cycloaliphatischen, insbesondere die aliphatischen Di- bzw. Polycarbonsäuren bzw. deren Anhydride und die mehrwertigen Alkohole entsprechend den unter A2a definierten und exemplarisch genannten. Ganz besonders bevorzugte Dicarbonsäure ist die Adipinsäure und bevorzugte Alkohole sind 1,4-Butandiol, 1,6-Hexandiol und Trimethylolpropan.

Das zahlenmittlere Molekulargewicht der Polyesterpolyole A2c liegt vorzugsweise im Bereich von 1200 bis 2500 g/mol, besonders bevorzugt 1500 bis 2200 g/mol ganz besonders bevorzugt 1700 bis 2100 g/mol. Das gewichtsmittlere Molekulargewicht der Polyesterpolyole A2c liegt vorzugsweise im Bereich von 5000 bis 10000 g/mol, besonders bevorzugt 6000 bis 9000 g/mol ganz besonders bevorzugt 7000 bis 8000 g/mol.

Das zahlenmittlere und gewichtsmittlere Molekulargewicht wird im Rahmen der vorliegenden Erfindung durch Gelpermeationschromatographie wie oben angegeben bestimmt.

Besonders bevorzugt sind die Polyesterpolyole A2c verzweigte Polyesterpolyole mit einer Hydroxylzahl die in den vorgenannten Bereichen liegt und/oder einem zahlen- und/oder gewichtsmittleren Molekulargewicht im vorgenannten Bereich.

### Spezies A3

Die Spezies A3 besitzt eine Struktur, die sich durch folgende Formel (I) wiedergeben lässt:

R²-(C=O)ᵣ-O-(AO)ₛ-R³ (I)

worin R² ein gesättigter oder ungesättigter, aliphatischer Kohlenwasserstoffrest mit 6 bis 30, vorzugsweise 8 bis 26, besonders bevorzugt 10 bis 24 und ganz besonders bevorzugt 12 bis 24 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30, vorzugsweise 1 bis 25 oder 2 bis 25, besonders bevorzugt 4 bis 22 oder 6 bis 20 und ganz besonders bevorzugt 8 bis 18 ist.

Bei den Resten R² handelt es sich vorzugsweise um acyclische Reste.

Die Reste AO können gleich oder verschieden sein und innerhalb der s Reste statistisch, blockartig oder gradientenartig angeordnet sein. Sind mehrere verschiedene Arten AO enthalten, so ist es bevorzugt, wenn der Anteil an Ethylenoxid mehr als 50 mol%, besonders bevorzugt mindestens 70 mol-% und ganz besonders bevorzugt mindestens 90 mol-%, bezogen auf die Gesamtzahl der Reste AO, beträgt. Vorzugsweise sind den vorgenannten Fällen die von Ethylenoxid verschiedenen Reste Propylenoxid-Reste.

Ist r = 0 und s > 0, so handelt es sich bei den Spezies der Formel (I) um alkoxylierte Fettalkohole, vorzugsweise ethoxylierte Fettalkohole, die gegebenenfalls phosphatiert (R³ = PO(OH)₂) oder mit einem Mono- oder Disaccharid oder dem Rest eines Alditols verethert sind.

Ist r = 1 und s > 0, so handelt es sich bei den Spezies der Formel (I) um alkoxylierte Fettsäuren, vorzugsweise ethoxylierte Fettsäuren, die gegebenenfalls phosphatiert (R³ = PO(OH)₂) oder mit einem Mono- oder Disaccharid oder dem Rest eines Alditols verethert sind.

Ist s = 0 und steht R³ für den Rest eines Mono- oder Disaccharids oder den Rest eines Alditols, so handelt es sich bei den Spezies der Formel (I) um Fettalkoholether eines Mono- oder Disaccharids oder eines Alditols (r = 0) oder um Fettsäureester eines Mono- oder Disaccharids oder eines Alditols (r = 1).

Besonders bevorzugt gilt, dass für einen Teil oder alle Spezies der Formel (I) s = 2 bis 25, besser noch 6 bis 20 und am besten 8 bis 18 ist und/oder für einen Teil oder alle Spezies der Formel (I) s = 0 ist und R³ für einen gegebenenfalls teilweise phosphatierten Rest eines Mono- oder Disaccharids oder einen gegebenenfalls teilweise phosphatierten Rest eines Alditols steht.

Insbesondere können auch Mischungen der Spezies A3 eingesetzt werden, in welchen für mindestens eine Spezies s = 0 gilt und für mindestens eine weitere Spezies s > 0, vorzugsweise 1 bis 25 oder 2 bis 25, besonders bevorzugt 4 bis 22 oder 6 bis 20 und ganz besonders bevorzugt 8 bis 18 gilt.

Ganz besonders bevorzugt handelt es sich um Mischungen, die obengenannte alkoxylierte Fettalkohole mit s > 0 und/oder obengenannte alkoxylierte Fettsäuren mit s > 0 enthalten und wenigstens eine weitere Spezies gewählt aus der Gruppe umfassend
gegebenenfalls phosphatierte oder veretherte Fettalkohole mit r = s = 0 und R³ = H, PO(OH)₂, ein Monosaccharid-Rest, Disaccharid-Rest oder Alditol-Rest und
gegebenenfalls phosphatierte oder veresterte Fettsäuren mit r = 1, s = 0 und R³ = H, PO(OH)₂, Monosaccharid-Rest, Disaccharid-Rest oder Alditol-Rest.

### Vernetzungskatalysatoren A4

Der Vernetzungskatalysator dient in erster Linie der Katalyse der Reaktion zwischen den freien Isocyanatgruppen der Polyisocyanate B1 und den hydroxylgruppenhaltigen Bestandteilen der Stammlack-Komponente A.

### Vernetzungskatalysatoren A4a

Der oder die Vernetzungskatalysatoren A4a werden gewählt aus der Gruppe der Organozinnverbindungen, vorzugsweise aus der Gruppe der Dialkylzinndicarboxylate und Dialkylzinndimercaptide.

Die Dialkylzinndicarboxylate besitzen vorzugsweise die allgemeine Formel (II)

[(CₘH₂ₘ₊₁)]₂Sn[OOC(CₙH₂ₙ₊₁)]₂ (II)

mit m = 1 bis 10, vorzugsweise m = 4 bis 8, und n = 5 bis 15, vorzugsweise n = 7 bis 13 und besonders bevorzugt n = 9 bis 11. Unter den Dialkylzinndicarboxylaten haben sich besonders Dibutylzinndilaurat und ganz besonders Dioctylzinndilaurat bewährt.

Die Dialkylzinndimercaptide besitzen vorzugsweise die allgemeine Formel (III)

[(CₘH₂ₘ₊₁)]₂Sn[S(CₙH₂ₙ₊₁)]₂ (III)

mit m = 1 bis 10, vorzugsweise m = 4 bis 8, und n = 6 bis 16, vorzugsweise n = 8 bis 14 und besonders bevorzugt n = 10 bis 12. Unter den Dialkylzinndimercaptiden hat sich besonders Dimethylzinndilaurylmercaptid bewährt.

Ganz besonders bevorzugt sind die Spezies Dioctylzinndilaurat und Dimethylzinndilaurylmercaptid. Als äußerst vorteilhaft hat sich der Einsatz von Dioctylzinndilaurat erwiesen, da dieses in der vorgesehenen Anwendung nicht nur als Katalysator wirkt, sondern überraschenderweise auch die Entformung des beschichteten Substrats aus dem Werkzeug verbessert.

### Vernetzungskatalysatoren A4b

Die Vernetzungskatalysatoren A4b sind optional. Sie können jedoch, sofern eine verlängerte Topfzeit der Beschichtungsmittelzusammensetzungen gewünscht ist, gemeinsam mit den Vernetzungskatalysatoren A4a eingesetzt werden.

Die Vernetzungskatalysatoren A4b sind vorzugsweise zinnfrei.

Besonders bevorzugt handelt es sich um Reaktionsprodukte zwischen einerseits Zinkbiscarboxylaten wie beispielsweise Zinkbis(2-ethylhexylcarboxylat) und andererseits Amidinen, insbesondere Guanidinen wie beispielsweise Tetramethylguanidin, oder Imidazol. Das Verhältnis zwischen Zinkbiscarboxylat einerseits und Amidin, Guanidin und Imidazol andererseits beträgt vorzugsweise 1,0: ≤ 2,2. Als Zinkbiscarboxylate können insbesondere solche der allgemeinen Formel Zn[OOC(CₙH₂ₙ₊₁)]₂ eingesetzt werden, worin vorzugsweise n = 5 bis 15, besonders bevorzugt von = 7 bis 13 und ganz besonders bevorzugt n = 8 bis 11 ist.

Besonders bevorzugt werden die Vernetzungskatalystoren A4b kombiniert mit aromatischen, monomeren Carbonsäuren eingesetzt, bei welchen die Carboxylgruppe in Konjugation zu einem aromatischen pi-Elektronensystem steht.

Dabei kann die Anzahl der Carboxylgruppen variieren, wobei die Carbonsäuren bevorzugt eine Carboxylgruppe aufweisen. Bevorzugt weisen die monomeren aromatischen, ggf. substituierten Carbonsäuren ein Molekulargewicht < 500 g/mol, besonders bevorzugt < 300 g/mol, auf. Bevorzugt werden monomere aromatische, ggf. substituierte Carbonsäuren eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO gewählt oder aber ein anderes geeignetes Medium, in dem die Säure löslich ist. Geeignet sind monomere aromatische Mono- und Polycarbonsäuren, die entsprechenden Alkyl- und Aryl-substituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, Alkyl- bzw. Aryl-substituierte Phthalsäure und Terephthalsäure, Benzoesäure und Alkyl- bzw. Aryl-substituierte Benzoesäure, aromatische Carbonsäuren mit weiteren funktionellen Gruppen wie Salicylsäure und Acetylsalicylsäure, Alkyl- bzw. Arylsubstituierte Salicylsäure oder Isomere davon, mehrkernige aromatische Carbonsäuren, wie die Isomeren der Naphthalincarbonsäure und deren Derivate. Bevorzugt enthält das Beschichtungsmittel als monomere aromatische Carbonsäure Benzoesäure, tert.-Butylbenzoesäure, 3,4-Dihydroxybenzoesäure, Salicylsäure und/oder Acetylsalicylsäure, besonders bevorzugt Benzoesäure.

### Polvethermodifizierte Alkylpolysiloxane A5

Die erfindungsgemäßen Beschichtungsmittelzusammensetzungen enthalten polyethermodifizierte Alkylpolysiloxane A5, vorzugsweise polyethermodifizierte Methylpolysiloxane. Durch Zusatz von vorzugsweise 0,5 bis 5 Gew.-%, besonders bevorzugt 1 bis 4 Gew.-% und ganz besonders bevorzugt 1 bis 3 Gew.-% an polyethermodifizierten Alkylpolysiloxanen, insbesondere der vorgenannten Mengen an polyethermodifizierten Methylpolysiloxanen, bezogen auf das Gesamtgewicht der Stammlack-Komponente A, kommt es zu einer verbesserten Wirkung der Spezies A3 auf die Entformungswirkung, des gehärteten beschichteten faserverstärkten Bauteils oder Schaumstoffs aus dem Formwerkzeug.

Weiterer Gegenstand der vorliegenden Erfindung ist daher auch eine Kombination der Spezies A3 mit den polyethermodifizierten Alkylpolysiloxanen A5, insbesondere als Entformungsmittel, besonders bevorzugt als Entformungsmittel oder Entformungsadditiv für Zweikomponenten-Beschichtungsmittelzusammensetzungen, wobei letztere mindestens eine Poly(meth)acrylat-Komponente A1, wie hierin definiert, mindestens eine Polyesterpolyol-Komponente A2, wie hierin definiert, mindestens einen oder mehrere Vernetzungskatalysatoren A4, wie hierin definiert, und mindestens eine Härter-Komponente B, wie hierin definiert, umfassen. Gegenstand der Erfindung ist daher auch die Verwendung einer Kombination der Spezies A3 mit den polyethermodifizierten Alkylpolysiloxanen A5, insbesondere als Entformungsmittel für Zweikomponenten-Beschichtungsmittelzusammensetzungen, wobei letztere mindestens eine Poly(meth)acrylat-Komponente A1, wie hierin definiert, mindestens eine Polyesterpolyol-Komponente A2, wie hierin definiert, mindestens einen oder mehrere Vernetzungskatalysatoren A4, wie hierin definiert, und mindestens eine Härter-Komponente B, wie hierin definiert, umfassen.

Das Gewichts-Verhältnis aller Spezies A3 zu den polyethermodifizierten Alkylpolysiloxanen A5 in vorgenannten Kombinationen beträgt vorzugsweise 5:1 bis 1:1, besonders bevorzugt 4:1 bis 1,5:1 und ganz besonders bevorzugt 3:1 bis 2:1.

Die erfindungsgemäße Kombination aus Spezies A3 und polyethermodifizierten Alkylpolysiloxanen A5 beziehungsweise das diese enthaltende Entformungsmittel, enthält die Spezies A3 und die polyethermodifizierten Alkylpolysiloxanen A5 neben gegebenenfalls vorhandenen organischen Lösemitteln vorzugsweise als Hauptbestandteile, besonders bevorzugt als einzige Bestandteile.

In der Kombination der Spezies A3 mit dem oder den polyethermodifizierten Alkylpolysiloxanen A5 bzw. den Entformungsmitteln, werden besonders bevorzugt Mischungen verschiedener Spezies A3 eingesetzt, in welchen für mindestens eine Spezies s = 0 gilt und für mindestens eine weitere Spezies s > 0, vorzugsweise 1 bis 25 oder 2 bis 25, besonders bevorzugt 4 bis 22 oder 6 bis 20 und ganz besonders bevorzugt 8 bis 18 gilt. Ganz besonders bevorzugt handelt es sich um Mischungen, die obengenannte alkoxylierte Fettalkohole mit s > 0 und/oder obengenannte alkoxylierte Fettsäuren mit s > 0 enthalten und wenigstens eine weitere Spezies gewählt aus der Gruppe umfassend
gegebenenfalls phosphatierte oder veretherte Fettalkohole mit r = s = 0 und R³ = H, PO(OH)₂, ein Monosaccharid-Rest, Disaccharid-Rest oder Alditol-Rest und gegebenenfalls phosphatierte oder veresterte Fettsäuren mit r = 1, s = 0 und R³ = H, PO(OH)₂, Monosaccharid-Rest, Disaccharid-Rest oder Alditol-Rest.

### Pigmente A6 und/oder Füllstoffe A6

Die erfindungsgemäßen Beschichtungsmittelzusammensetzungen können pigmentiert und/oder mit Füllstoffen gefüllt vorliegen. Als Pigmente und Füllstoffe können prinzipiell alle anorganischen und organischen Pigmente und Füllstoffe eingesetzt werden.

Für die vorliegende Erfindung ist eine scharfe Unterscheidung zwischen Pigmenten und Füllstoffen nicht notwendig. In der Praxis wird zur Unterscheidung häufig der Brechungsindex herangezogen. Liegt dieser oberhalb von 1,7 so spricht man in der Regel von Pigmenten, liegt er unterhalb dieses Werts von Füllstoffen.

Typische anorganische Pigmente sind Oxid- und Oxidhydroxid-Pigmente, wie beispielsweise Titandioxid wie insbesondere Rutil, Zinkoxid, Eisenoxid und Chromoxid, Oxid-Mischphasenpigmente, wie beispielsweise Bismut-Molybdän-Vanadium-Oxidgelb, Chromtitangelb, Spinellblau, Eisen-Manganbraun, Zink-Eisenbraun, Eisen-Manganschwarz und Spinellschwarz, Sulfid- und Sulfidselenidpigmente, wie beispielsweise Zinksulfid, Lithopone, Cadmiumgelb und Cadmiumrot, Chromat- und Chromat-Molybdän-Mischphasenpigmente, wie beispielsweise Chromgelb und Molybdatorange und -rot, Komplexsalzpigmente, wie beispielsweise Eisenblau, Silikatpimente, wie beispielsweise Aluminiumsilikat und Ultramarin (blau, violett und rot), Pigmente aus chemischen Elementen, wie beispielsweise Aluminium, Kupfer-Zink-Legierungen und insbesondere Pigmentruß, sowie andere Pigmente, wie beispielweise Bariumsulfat.

Typische organische Pigmente sind Monoazopigmente, Disazopigmente und polycyclische Pigmente wie beispielsweise Perylenpigmente und Phthalocyaninpigmente.

Typische anorganische Füllstoffe sind Silicate, wie beispielsweise Talk und Kaolin, Kieselsäuren, wie beispielsweise gefällte oder pyrogene Kieselsäuren, Oxide, wie beispielsweise Aluminiumhydroxid oder Magnesiumhydroxid, Sulfate, wie beispielsweise Blanc fixe und Calciumsulfat, sowie verschiedene Carbonate.

### Additive A7

Die erfindungsgemäßen Beschichtungsmittelzusammensetzungen können von den Bestandteilen A1a bis A6 verschiedene Additive aus der Gruppe der Netz- und/oder Dispergiermittel, Rheologiehilfsmittel wie beispielsweise Verdickungsmittel und/oder Thixotropiermittel und Verlaufmittel enthalten. Netz- und Dispergiermittel werden insbesondere dann eingesetzt, wenn die erfindungsgemäße Beschichtungsmittelzusammensetzung eines oder mehrere Pigmente A6 und/oder Füllstoffe A6 enthält.

### Bestandteile der Härter-Komponente B

### Polyisocyanate B1

Die Härter-Komponente B umfasst Polyisocyanate B1, die eine NCO-Gruppenfunktionalität von größer 2,4 bis 5, vorzugsweise 2,6 bis 4, besonders bevorzugt 2,8 bis 3,6 besitzen.

Bei den Polyisocyanaten B1 handelt es sich vorzugsweise um Oligomere, vorzugsweise Trimere oder Tetramere von Diisocyanaten. Besonders bevorzugt handelt es sich um Iminooxadiazindione, Isocyanurate, Allophanate und/oder Biurete von Diisocyanaten, ganz besonders bevorzugt um Iminooxadiazindione und/oder Allophanatgruppen enthaltende Trimere.

Besonders bevorzugt handelt es sich bei den Polyisocyanaten B1 der Härter-Komponente B um aliphatische und/oder cycloaliphatische, ganz besonders bevorzugt aliphatische Polyisocyanate.

Besonders bevorzugt dienen Hexamethylendiisocyanat und/oder Isophorondiisocyanat, ganz besonders bevorzugt nur Hexamethylendiisocyanat als Diisocyanat-Basis der oben genannten Oligomere, insbesondere die der oben genannten Tri- oder Tetramere.

Ganz besonders bevorzugt umfasst die Härter-Komponente B aliphatische Polyisocyanate B1 auf der Basis von Trimeren und/oder Tetrameren aliphatischer Diisocyanate, vorzugsweise Trimeren aliphatischer Diisocyanate gewählt aus der Gruppe bestehend aus Hexamethylendiisocyanat und Isophorondiisocyanat, vorzugsweise nur Hexamethylendiisocyanat, wobei die Polyisocyanate mindestens eine Iminooxadiazindion-, Isocyanaurat- und/oder Allophanat-Struktur enthalten.

Durch die Auswahl des Polyisocyanats B1 oder einer Kombination von Polyisocyanaten B1 lässt sich die Härte der resultierenden gehärteten Beschichtung beeinflussen.

Insbesondere die Verwendung Iminooxadiazindion-Strukturen enthaltender Polyisocyanate B1 führt zu Beschichtungen mit besonderer Härte, wodurch verhindert wird, dass sich Substratstrukturen bis zur gehärteten Beschichtungsoberfläche fortpflanzen und dort eine unerwünschte Welligkeit auftritt. Derartige Polyisocyanate sind beispielsweise von der Firma Covestro unter der Bezeichnung Desmodur N3900 erhältlich.

Ähnliche Resultate können mit Isocyanurat-Strukturen enthaltenden Polyisocyanaten B1, wie sie beispielsweise unter der Bezeichnung Desmodur N3800 von der Firma Covestro erhältlich sind, erreicht werden, wobei die Beschichtung weiterhin hart, jedoch flexibler ist.

Allophanat-Strukturen enthaltende Polyisocyanate B1 sind ebenfalls von der Firma Covestro beispielsweise unter der Bezeichnung Desmodur N3500 erhältlich.

### Weitere Beschichtungsmittelbestandteile

### Weitere Additive A8 und/oder B2

Die weiteren von den Stammlack-Bestandteilen A1a bis A7 verschiedenen Additive A8 sind, wenn sie überhaupt eingesetzt werden, in der Regel Bestandteile der Stammlack-Komponente A.

Soweit diese weiteren Additive nicht gegenüber der Härter-Komponente B reaktiv sind, können diese jedoch prinzipiell auch in der Härter-Komponente B als Additive B2 eingesetzt werden.

Beispiele geeigneter Additive A8 beziehungsweise B2 sind UV-Absorber, Lichtschutzmittel, Radikalfänger, thermolabile radikalische Initiatoren, von den Vernetzungskatalysatoren A4a und A4b verschiedene Katalysatoren für die Vernetzung, Beschleuniger, Aktivatoren, Reaktionsverzögerer, von den Polyolen der Poly(meth)acrylat-Komponente A1 und der Polyesterpolyol-Komponente A2 verschiedene Polyole wie beispielsweise Mono- oder Disaccharide oder Alditole wie insbesondere Sorbitol, Entlüftungsmittel, Slipadditive, Polymerisationsinhibitoren, Entschäumer, Emulgatoren, Haftvermittler, filmbildende Hilfsmittel oder Flammschutzmittel. Weitere Beispiele geeigneter Lackadditive werden in dem Lehrbuch Lackadditive von Johan Bieleman, Wiley-VCH, Weinheim, New York, 1998, beschrieben.

### Lösemittel

Bei den erfindungsgemäßen Beschichtungsmittelzusammensetzungen handelt es sich um lösemittelbasierte Beschichtungsmittelzusammensetzungen. Dies bedeutet, dass die erfindungsgemäßen Beschichtungsmittelzusammensetzungen organische Lösemittel als Hauptlösemittel enthalten. Die organischen Lösemittel stellen flüchtige Bestandteile der erfindungsgemäßen Zusammensetzung dar, die beim Trocknen beziehungsweise Ablüften der aus diesen herstellten Nassfilme ganz oder teilweise verdampfen. Neben der Eigenschaft der Lösemittel die Bestandteile der Beschichtungsmittelzusammensetzung zu lösen und/oder zu dispergieren, dienen diese auch der Einstellung der Viskosität, insbesondere der Applikationsviskosität der Beschichtungsmittelzusammensetzung.

Der Anteil der organischen Lösemittel bezogen auf das Gesamtgewicht der erfindungsgemäßen Zusammensetzungen ergibt sich aus der Differenz zwischen 100 Gew.-% und der Summe der gewichtsprozentualen Anteile aller anderen Bestandteile der erfindungsgemäßen Zweikomponenten-Beschichtungsmittelzusammensetzung.

Im Rahmen der vorliegenden Erfindung bevorzugte organische Lösemittel sind aprotisch. Besonders bevorzugt handelt es sich um polare aprotische organische Lösemittel. Ganz besonders bevorzugt verhalten sich die organischen Lösemittel chemisch inert gegenüber den restlichen Bestandteilen der Stammlack-Komponente A und insbesondere gegenüber den Bestandteilen der Härter-Komponente B.

Bevorzugte organische Lösemittel sind im Rahmen der vorliegenden Erfindung beispielsweise Ketone wie Aceton, Methylethylketon, Cyclohexanon, Methylisobutylketon, Methylisoamylketon oder Diisobutylketon; Ester wie Ethylacetat, n-Butylacetat, Ethylenglykoldiacetat, Butyrolacton, Diethylcarbonat, Propylencarbonat, Ethylencarbonat, 2-Methoxypropylacetat (MPA) und Ethylethoxypropionat; Amide wie N,N-Dimethylformamid, N,N-Dimethylacetamid, N-Methylpyrrolidon und N-Ethylpyrrolidon; Methylal, Butylal, 1,3-Dioxolan, Glycerolformal; und etwas weniger bevorzugt, da diese unpolar sind, Kohlenwasserstoffe wie Benzol, Toluol, n-Hexan, Cyclohexan und Solventnaphtha. Ganz besonders bevorzugte Lösemittel gehören der Klasse der Ester an worunter ganz besonders bevorzugt n-Butylacetat und 1-Methoxypropylacetat zu nennen sind.

### Beispiele bevorzugter Ausführungsformen der erfindungsgemäßen Zweikomponenten-Beschichtungsmittelzusammensetzung

Bevorzugt umfasst die Stammlack-Komponente A mindestens
- A1: eine Poly(meth)acrylat-Komponente, die eines oder mehrere hydroxyfunktionelle Poly(meth)acrylate A1a mit einer Hydroxylzahl von 50 bis 120 mg KOH/g enthält;
- A2: eine Polyesterpolyol-Komponente, die eines oder mehrere aromatische, verzweigte Polyesterpolyole A2a mit einer Hydroxylzahl von 100 bis 200 mg KOH/g und eines oder mehrere Polyesterpolyole aus der Gruppe bestehend aus Polyesterpolyolen A2b und Polyesterpolyolen A2c, enthält;
- A3: eine oder mehrere Spezies der allgemeinen Formel (I)

R²-(C=O)ᵣ-O-(AO)ₛ-R³ (I)

enthält,
worin R² ein gesättigter oder ungesättigter, aliphatischer Kohlenwasserstoffrest mit 6 bis 30 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols steht,
AO für einen oder mehrere Alkylenoxid-Reste gewählt aus der Gruppe bestehend aus Ethylenoxid und Propylenoxid steht,
r = 0 oder 1 ist, und
s = 0 bis 30 ist;
- A4: einen oder mehrere Vernetzungskatalysatoren A4a gewählt aus der Gruppe der Organozinnverbindungen, umfassend Dialkylzinndicarboxylate und Dialkylzinndimercaptide, enthält,
- A5: eines oder mehrere polyethermodifizierte Alkylpolysiloxane,
- A6: optional eines oder mehrere Pigmente und/oder einen oder mehrere Füllstoffe; und
- A7: eines oder mehrere Additive gewählt aus der Gruppe bestehend aus Netz- und/oder Dispergiermitteln, Rheologiehilfsmitteln und Verlaufmitteln, für den Fall, dass auch eines oder mehrere Pigmente A6 und/oder einer oder mehrere Füllstoffe A6 in der Stammlack-Komponente A enthalten sind.

Besonders bevorzugt umfasst die Stammlack-Komponente A mindestens
- A1: eine Poly(meth)acrylat-Komponente, die eines oder mehrere hydroxyfunktionelle Poly(meth)acrylate A1a mit einer Hydroxylzahl von 65 bis 100 mg KOH/g und eines oder mehrere hydroxyfunktionelle Poly(meth)acrylate A1b, enthält
- A2: eine Polyesterpolyol-Komponente, die eines oder mehrere aromatische, verzweigte Polyesterpolyole A2a mit einer Hydroxylzahl von 110 bis 180 mg KOH/g und eines oder mehrere Polyesterpolyole aus der Gruppe bestehend aus Polyesterpolyolen A2b und Polyesterpolyolen A2c, enthält;
- A3: eine oder mehrere Spezies der allgemeinen Formel (I)

R²-(C=O)ᵣ-O-(AO)ₛ-R³ (I)

worin R² ein gesättigter oder ungesättigter, aliphatischer Kohlenwasserstoffrest mit 10 bis 24 Kohlenstoffatomen ist,
R³ für H, einen Rest PO(OH)₂ oder den gegebenenfalls teilweise phosphatierten Rest eines Monosaccharids oder den gegebenenfalls teilweise phosphatierten Rest eines Alditols steht, AO für einen oder mehrere Alkylenoxid-Reste gewählt aus der Gruppe bestehend aus Ethylenoxid und Propylenoxid steht, r = 0 oder 1 ist und s = 0 bis 30 ist,
- A4: einen oder mehrere Vernetzungskatalysatoren A4a gewählt aus der Gruppe der Dialkylzinndicarboxylate;
- A5: eines oder mehrere polyethermodifizierte Methylpolysiloxane;
- A6: optional eines oder mehrere Pigmente und/oder einen oder mehrere Füllstoffe; und
- A7: eines oder mehrere Additive gewählt aus der Gruppe bestehend aus Netz- und/oder Dispergiermitteln, Rheologiehilfsmitteln und Verlaufmitteln, für den Fall, dass auch eines oder mehrere Pigmente A6 und/oder einer oder mehrere Füllstoffe A6 in der Stammlack-Komponente A enthalten sind.

Ganz besonders bevorzugt umfasst die Stammlack-Komponente A mindestens
- A1: eine Poly(meth)acrylat-Komponente, die eines oder mehrere hydroxyfunktionelle Poly(meth)acrylate A1a mit einer Hydroxylzahl von 50 bis 120 mg KOH/g und eines oder mehrere hydroxyfunktionelle Poly(meth)acrylate A1b, enthält
- A2: eine Polyesterpolyol-Komponente, die eines oder mehrere aromatische, verzweigte Polyesterpolyole A2a mit einer Hydroxylzahl von 110 bis 180 mg KOH/g und eines oder mehrere Polyesterpolyole aus der Gruppe bestehend aus Polyesterpolyolen A2b und Polyesterpolyolen A2c, enthält;
- A3: mehrere Spezies der allgemeinen Formel (I)

R²-(C=O)ᵣ-O-(AO)ₛ-R³ (I)

worin R² ein gesättigter oder ungesättigter, aliphatischer Kohlenwasserstoffrest mit 10 bis 24 Kohlenstoffatomen ist,
R³ für H, einen Rest PO(OH)₂ oder den gegebenenfalls teilweise phosphatierten Rest eines Monosaccharids oder den gegebenenfalls teilweise phosphatierten Rest eines Alditols steht, AO für einen oder mehrere Alkylenoxid-Reste gewählt aus der Gruppe bestehend aus Ethylenoxid und Propylenoxid steht, r = 0 oder 1 ist und für mindestens eine Spezies s = 0 gilt und für mindestens eine weitere Spezies s = 2 bis 25, vorzugsweise 6 bis 20 gilt,
- A4: einen Vernetzungskatalysator gewählt aus der Gruppe der Dialkylzinndicarboxylate der allgemeinen Formel (II)

[(CₘH₂ₘ₊₁)]₂Sn[OOC(CₙH₂ₙ₊₁)]₂ (II)

mit m = 1 bis 10und n = 5 bis 15;
- A5: eines oder mehrere polyethermodifizierte Methylpolysiloxane;
- A6: eines oder mehrere Pigmente und/oder einen oder mehrere Füllstoffe; und
- A7: eines oder mehrere Additive gewählt aus der Gruppe bestehend aus Netz- und/oder Dispergiermitteln, Rheologiehilfsmitteln und Verlaufmitteln.

Bevorzugt umfasst die Härter-Komponente B mindestens
i. eines oder mehrere aliphatische Polyisocyanate B1, welche im Mittel 2,4 bis 4 NCO-Gruppen aufweisen.

Besonders bevorzugt umfasst die Härter-Komponente B mindestens
i. eines oder mehrere aliphatische Polyisocyanate B1, welche im Mittel 2,6 bis 4 NCO-Gruppen aufweisen und wobei es sich um Trimere und/oder Tetramere von Diisocyanaten handelt, und die Trimere und/oder Tetramere gewählt sind aus der Gruppe der Iminooxadiazindione, Isocyanurate, Allophanate und Biurete.

Ganz besonders bevorzugt umfasst die Härter-Komponente B mindestens
i. eines oder mehrere aliphatische Polyisocyanate B1, welche im Mittel 2,8 bis 3,6 NCO-Gruppen aufweisen und wobei es sich um Trimere und/oder Tetramere von Diisocyanaten handelt, die Trimere und/oder Tetramere gewählt sind aus der Gruppe der Iminooxadiazindione, Isocyanurate und Allophanate und die Diisocyanate gewählt sind aus der Gruppe bestehend aus Hexamethylendiisocyanat und Isophorondiisocyanat.

### Einsatzmengen der Bestandteile

Die im Folgenden angegebenen prozentualen Anteile der Bestandteile A1 bis A8 in der Stammlack-Komponente A sowie B1 und B2 in der Härter-Komponente haben Gültigkeit für alle oben angegebenen Ausführungsformen der Erfindung. Die prozentualen Anteile gelten somit sowohl für die breiteste Definition des jeweiligen Bestandteils, als auch für die bevorzugteste Variante des betreffenden Bestandteils gleichermaßen. Dies gilt auch unabhängig davon, ob der jeweilige Bestandteil aus einer Spezies oder mehreren Spezies dieses Bestandteils besteht.

Die Gewichtssumme der Bestandteile A1 bis A8, B1 und B2 am Gesamtgewicht der erfindungsgemäßen Zweikomponenten-Beschichtungsmittelzusammensetzung beträgt vorzugsweise 50 bis 80 Gew.-%, vor einer optionalen Verdünnung auf Applikationsviskosität.

Das Gewichtsverhältnis des Festkörpers der Stammlack-Komponente A zum Festkörper der Härter-Komponente B kann in weiten Bereichen variieren. Bevorzugt ist es hierbei, dass das Gewichtsverhältnis des Festkörpers der Stammlack-Komponente A zum Festkörper der Härter-Komponente B im Bereich 4:1 bis 0,8:1, besonders bevorzugt im Bereich 3,5:1 bis 1:1 liegt.

Die Menge an Bestandteilen der Poly(meth)acrylat-Komponente A1 in Bezug auf die Gewichtssumme der Bestandteile der Poly(meth)acrylat-Komponente A1 und der Polyesterpolyol-Komponente A2 kann ebenfalls in weiten Bereichen variieren. Bevorzugt beträgt der Anteil der Bestandteile der Poly(meth)acrylat-Komponente A1 bezogen auf die Gewichtssumme der Bestandteile der der Poly(meth)acrylat-Komponente A1 und der Polyesterpolyol-Komponente A2 mehr als 50 Gew.-%, besonders bevorzugt mehr als 60 Gew.-% und weniger als 98 Gew.-%, ganz besonders bevorzugt weniger als 95 Gew.-% wie vorzugsweise 50 bis 98 Gew.-% und besonders bevorzugt 60 bis 95 Gew.-%.

Die Menge an hydroxyfunktionellen Poly(meth)acrylaten A1a in Bezug auf die Gewichtssumme der hydroxyfunktionellen Poly(meth)acrylate A1a und der Polyesterpolyole A2a kann ebenfalls in weiten Bereichen variieren. Bevorzugt beträgt der Anteil an hydroxyfunktionellen Poly(meth)acrylaten A1a in Bezug auf die Gewichtssumme der hydroxyfunktionellen Poly(meth)acrylate A1a und der Polyesterpolyole A2a mehr als 65 Gew.-%, besonders bevorzugt mehr als 70 Gew.-% und weniger als 95 Gew.-%, ganz besonders bevorzugt weniger als 92 Gew.-% wie vorzugsweise 65 bis 95 Gew.-% und besonders bevorzugt 70 bis 92 Gew.-%.

Sind ein oder mehrere Bestandteile A2b und/oder A2c in der erfindungsgemäßen Zweikomponenten-Beschichtungsmittelzusammensetzung enthalten, so beträgt deren Anteil an der Polyesterpolyol-Komponente A2, vorzugsweise weniger als 50 Gew.-% und besonders bevorzugt weniger als 45 Gew.-%, jedoch vorzugsweise mehr als 25 Gew.-%, bevorzugt mehr als 30 Gew.-% und besonders bevorzugt mehr als 35 Gew.-%.

Die Gesamtheit der Spezies A3 ist vorzugsweise in einer Menge von 1 bis 7 Gew.-%, besonders bevorzugt 2 bis 6 Gew.-% und ganz besonders bevorzugt in einer Menge von 3 bis 5 Gew.-% bezogen auf das Gesamtgewicht der Stammlack-Komponente A enthalten.

Der oder die Vernetzungskatalysatoren A4a werden vorzugsweise in einer Menge von 0,15 bis 5,0 Gew.-%, besonders bevorzugt 0,3 bis 4,0 Gew.-%, insbesondere 0, 5 bis 3,0 Gew.-% bezogen auf das Gesamtgewicht der Stammlack-Komponente A eingesetzt.

Das eine oder die mehreren polyethermodifizierten Alkylpolysiloxane A5 sind in der erfindungsgemäßen Zweikomponenten-Beschichtungsmittelzusammensetzung vorzugsweise in einer Menge von 0,5 bis 5 Gew.-%, besonders bevorzugt 1 bis 4 Gew.-%, ganz besonders bevorzugt 1 bis 3 Gew.-% oder 1,2 bis 2,8 Gew.-% bezogen auf das Gesamtgewicht der Stammlack-Komponente A, enthalten.

Der Gehalt der erfindungsgemäßen Zweikomponenten-Beschichtungsmittelzusammensetzung an Pigmenten A6 und/oder Füllstoffen A6 kann in weiten Bereichen variieren. Vorzugsweise beträgt der Gesamtgehalt an Pigmenten und/oder Füllstoffen 0,5 bis 30 Gew.-%, besonders bevorzugt 1 bis 25 Gew.-% und ganz besonders bevorzugt 3 bis 22 Gew.-% bezogen auf das Gesamtgewicht der Stammlack-Komponente A je nach Deckkraft der Pigmente oder gewünschtem Füllstoffgrad.

Der Gehalt der erfindungsgemäßen Zweikomponenten-Beschichtungsmittelzusammensetzung an Additiven A7 kann ebenfalls in weiten Bereichen variieren. Sind Verlaufmittel in den erfindungsgemäßen Zweikomponenten-Beschichtungsmittelzusammensetzungen enthalten, so beträgt deren Gehalt bezogen auf das Gesamtgewicht der Stammlack-Komponente A vorzugsweise 0,1 bis 2 Gew.-%, besonders bevorzugt 0,2 bis 1,5 Gew.-% und besonders bevorzugt 0,3 bis 1 Gew.-%. Sind Rheologiehilfsmittel in den erfindungsgemäßen Zweikomponenten-Beschichtungsmittelzusammensetzungen enthalten, so beträgt deren Gehalt bezogen auf das Gesamtgewicht der Stammlack-Komponente A vorzugsweise 0,2 bis 5,0 Gew.-%, besonders bevorzugt 0,5 bis 4,0 Gew.-% und besonders bevorzugt 0,8 bis 3,0 Gew.-%. Der Gehalt an Netz- und Dispergiermitteln variiert üblicherweise in breiteren Bereichen insbesondere in Abhängigkeit des Pigment- und/oder Füllstoffgehalts und der Art der Pigmente und/oder Füllstoffe.

Üblicherweise beträgt der Gehalt and Netz- und Dispergiermitteln bezogen auf das Gesamtgewicht der Stammlack-Komponente A vorzugsweise 0,1 bis 5 Gew.-%, besonders bevorzugt 0,2 bis 3 Gew.-%. Der Gesamtgehalt an Additiven A7 bezogen auf das Gesamtgewicht der Stammlack-Komponenten beträgt vorzugsweise 0 bis 8 Gew.-%, besonders bevorzugt 0,1 bis 5 Gew.-% und ganz besonders bevorzugt 0,5 bis 4 Gew.-%.

Die Härter-Komponente B enthält vorzugsweise mindestens 80 Gew.-%, besonders bevorzugt mindestens 90 Gew.-% und ganz besonders bevorzugt mindestens 95 Gew.-%, besser noch 100 Gew.-% an Polyisocyanaten B1. Es ist jedoch auch möglich, dass die Härter-Komponente weitere Di- oder Polyisocyanate B2 enthält, die nicht unter die Definition der Polyisocyanate B1 fallen, insbesondere solche die eine NCO-Funktionalität aufweisen, die kleiner 2,4 oder größer 5 ist.

Die optionalen Additive A8 und B2 können bezogen auf das Gesamtgewicht der erfindungsgemäßen Zweikomponenten-Beschichtungsmittelzusammensetzung vorzugsweise in einer Gesamtmenge von 0 bis 8 Gew.-%, vorzugsweise bis maximal 5 Gew.-%, wie beispielsweise 0,5 bis 8 Gew.-% oder 1 bis 5 Gew.-% enthalten sein.

### Verfahren zur Herstellung beschichteter Schaumstoffe

Weiterer Gegenstand der vorliegenden Erfindung ist ein Verfahren zur Herstellung beschichteter Schaumstoffe beziehungsweise von Bauteilen daraus.

Unter einem Bauteil wird hierin wie üblich ein Einzelteil verstanden, das mit anderen Bauteilen verbunden eine Baugruppe bildet. Handelt es sich beispielsweise beim Bauteil um das Teil einer Karosserie, so kann dieses mit anderen Karosseriebauteilen zu einer Karosserie zusammengefügt werden. Allgemein betrifft die Erfindung jedoch unabhängig vom Zweck des Schaumstoffs oder des faserverstärkten Kunststoffs als Bauteil dienen zu können, generell die Herstellung beschichteter Schaumstoffe bzw. beschichteter faserverstärkter Kunststoffe und ist somit nicht auf Bauteile im obigen Sinne beschränkt. Ist daher im Folgenden von der Beschichtung von Bauteilen aus einem Schaumstoff oder faserverstärkten Kunststoff die Rede, so umfasst dies allgemein auch die Beschichtung von Schaumstoffen oder faserverstärkten Kunststoffen ohne "Bauteilfunktion".

Zu den Schaumstoffen zählen hierin unter anderem elastomere Schaumstoffe, insbesondere Weichschaumstoffe, aber auch duroplastische Schaumstoffe, insbesondere Hartschaumstoffe.

Die Schaumstoffe können offenzellig, geschlossenzellig oder gemischtzellig sein. Auch sogenannte Integralschaumstoffe werden hierin zu den Schaumstoffen gezählt.

Besonders bevorzugte Schaumstoffe sind Polyurethanschaumstoffe. Diese werden üblicherweise aus einem oder mehreren Polyolen und einem oder mehreren Polyisocyanaten hergestellt. Als Treibmittel zur Schaumbildung wird der Polyolkomponente zumeist Wasser zugegeben, welches mit einem Teil des Polyisocyanats unter Kohlendioxidbildung, und somit unter Aufschäumung reagiert. Unter Verwendung langkettiger Polyole werden weiche bis elastische Schaumstoffe, insbesondere Weichschaumstoffe, erhalten. Werden kurzkettige Polyole verwendet, so entstehen in der Regel stark vernetzte Strukturen, was in der Regel zur Bildung von Hartschaumstoffen führt.

Den Schaumstoff-Formulierungen können auch Fasern zugemischt werden. Werden solche Formulierungen aufgeschäumt, so entstehen sogenannte faserverstärkte Schaumstoffe. Fasern werden insbesondere bei der Herstellung von Hartschäumen eingesetzt.

Im Rahmen der vorliegenden Erfindung werden die Schaumstoffe in einem diskontinuierlichen Verfahren, vorzugsweise dem Injektions-Formgebungs-Verfahren (Injection Molding), Injektions-Kompressions-Formgebungs-Verfahren (Injection Compression Molding), Kompressions-Formgebungs-Verfahren (Compression Molding) oder besonders bevorzugt dem sogenannten Reaktions-Injektions-Formgebungs-Verfahren (Reaction Injection Molding; RIM), hergestellt.

Die Beschichtung der Schaumstoffe erfolgt bei der Ausbildung der Schaumstoffe. Hierzu wird zunächst wenigstens eine Oberfläche eines Formwerkzeugs, vorzugsweise ohne Verwendung eines externen Entformungsmittels, mit der erfindungsgemäßen Beschichtungsmittelzusammensetzung beschichtet, vorzugsweise im Spritz- oder Sprühauftrag.

Vorzugsweise wird die Beschichtungsmittelschicht anschließend abgelüftet.

Anschließend kann in einem offenen oder geschlossenen Verfahren weiter verfahren werden.

Beim offenen Verfahren erfolgt eine sogenannte Hinterspritzung mit formgebendem Material.

Beim geschlossenen Verfahren wird das Formwerkzeug nach erfolgter Applikation der Beschichtungsmittelschicht geschlossen, bevor anschließend die Schaumstoffformulierung vorzugsweise durch Injektion eingebracht bzw. eingespritzt wird. Nach erfolgter Reaktion unter Ausbildung des Schaumstoffs und Härtung der Beschichtung ist der gebildete Schaumstoffformkörper mit einer Beschichtung aus der erfindungsgemäßen Beschichtungsmittelzusammensetzung beschichtet und kann dem Formwerkzeug entnommen werden.

Vorzugsweise lässt sich das erfindungsgemäße Verfahren durch folgende Schritte beschreiben, worin
(A) ein Formwerkzeug auf eine Temperatur von 100 bis 160 °C erhitzt wird
(B) das Formwerkzeug geöffnet wird und eine erfindungsgemäße lösemittelbasierte Zweikomponenten-Beschichtungsmittelzusammensetzung auf mindestens eine Oberfläche des Formwerkzeugs unter Bildung einer Beschichtungsmittelschicht aufgebracht wird und so eine Beschichtungsmittelschicht bildet,
(C)die Beschichtungsmittelschicht vorzugsweise abgelüftet wird,
(D) in offenem oder geschlossenem Verfahren eine einen Polymerschaum bildende Zusammensetzung auf die vorzugsweise abgelüftete Beschichtungsmittelschicht appliziert wird,
(E) die Aufschäumung der den Polymerschaum bildenden Zusammensetzung erfolgt,
(F) der Polymerschaum und die Beschichtungsmittelschicht gemeinsam gehärtet beziehungsweise vernetzt werden
   und
(G)anschließend der beschichtete Schaumstoff entnommen wird.

Die beschichteten Schaumstoffe lassen sich in vielen Bereichen einsetzen. So beispielsweise im Innen- und Außenbereich von Kraftfahrzeugen, insbesondere als Sitzpolster oder als Kotflügel, Schweller- oder Stoßfängerverkleidungen, aber auch als Schuhsohlen, oder im Bereich der Möbelposterungen.

### Verfahren zur Herstellung beschichteter faserverstärkter Kunststoffe

Weiterer Gegenstand der vorliegenden Erfindung ist ein Verfahren zur Herstellung beschichteter faserverstärkter Kunststoffe beziehungsweise von Bauteilen daraus.

Bei diesem Verfahren wird zunächst das Formwerkzeug auf eine Temperatur von 90 bis 160 °C, vorzugsweise 100 bis 150 °C vorgeheizt. Für faserverstärkte Polyester wie beispielsweise glasfaserverstärkte Polyester-Prepregs typischerweise auf Temperaturen von 100 bis 130 °C, vorzugsweise 100 bis 120 °C und für faserverstärkte Polyurethan-Prepregs typischerweise auf 130 bis 150 °C, vorzugsweise 140 bis 150 °C.

Das vorgeheizte Formwerkzeug wird geöffnet und die erfindungsgemäße Beschichtungsmittelzusammensetzung wird, vorzugsweise ohne Verwendung eines externen Entformungsmittels, auf die obere und untere Form aufgetragen. Vorzugsweise erfolgt der Auftrag des Beschichtungsmittels im Spritz- oder Sprühverfahren, beispielsweise mittels einer Fließbecherpistole (Firma Sata; Düse 1,3) und einem Druck von 1 bis 2 bar. Üblicherweise wird das Beschichtungsmittel hierbei nicht vorerwärmt und besitzt eine Temperatur von 15 bis 40 °C, vorzugsweise 20 bis 35 °C. Nach dem Auftrag des Beschichtungsmittels wird dieses vorzugsweise kurz abgelüftet typischerweise für 10 bis 60 s, vorzugsweise für 15 bis 45 s wie beispielsweise 30 s.

Vorzugsweise wird die Beschichtungsmittelschicht anschließend wie oben angegeben abgelüftet.

Auf die vorzugsweise abgelüftete Beschichtung wird ein Vorformling aus einer oder mehreren Lagen aus Fasern oder Faserverbünde, in das Formwerkzeug gelegt, der Formenträger geschlossen und der Hohlraum evakuiert. Die Fasern liegen vorzugsweise in Form von Faserverbünden, insbesondere in Form von Geweben, Gelegen, Gestricken, Bändern, Vliesen und/oder Matten vor.

Vorzugsweise werden die Vorformlinge bevor sie in das Formwerkzeug gelegt werden mit dem die Kunststoffmatrix bildenden Kunststoff getränkt bzw. in diese eingegossen, worauf vorzugsweise eine Vortrocknung, jedoch noch keine vollständige Härtung erfolgt.

Das Formwerkzeug wird geschlossen und das Beschichtungsmittel zusammen mit dem von der vorgetrockneten Kunststoffmatrix umgebenen Vorformling gehärtet.

Vorzugsweise beträgt die Verweilzeit im geschlossenen Formwerkzeug von 2 bis 20 min, besonders bevorzugt 3 bis 15 min. Der beaufschlagte Druck beträgt vorzugsweise 150 bis 350 bar, besonders bevorzugt 200 bis 300 bar.

Die Schichtdicke der Beschichtungsmittelschicht ist abhängig von der Menge des auf die Werkzeugoberfläche aufgebrachten Beschichtungsmittels und beträgt nach der Härtung vorzugsweise 30 bis 500 µm, besonders bevorzugt 40 bis 300 µm und insbesondere 50 bis 250 µm.

Als Bauteile aus den faserverstärkten Kunststoffen werden im erfindungsgemäßen Verfahren vorzugsweise vorgeformte faserverstärkte Kunststoffe, besonders bevorzugt Faser-Kunststoff-Verbunde gewählt aus der Gruppe bestehend aus kohlenstofffaserverstärkten Kunststoffen (CFK), glasfaserverstärkten Kunststoffen (GFK) und aramidfaserverstärkten Kunststoffen (AFK) eingesetzt.

Die Kunststoffmatrix, in welcher die Fasern eingebettet sind, ist vorzugsweise gewählt aus der Gruppe der Polyester, Polyurethane, Epoxidharze und Polyamide, besonders bevorzugt der Polyester und Polyurethane.

Besonders bevorzugte faserverstärkte Kunststoffe beziehungsweise Bauteile daraus enthalten Glasfasern.

Vorzugsweise lässt sich das erfindungsgemäße Verfahren durch folgende Schritte beschreiben, worin
(A) ein Formwerkzeug auf eine Temperatur von 100 bis 160 °C erhitzt wird,
(B) das Formwerkzeug geöffnet wird und eine erfindungsgemäße lösemittelbasierte Zweikomponenten-Beschichtungsmittelzusammensetzung auf mindestens eine Oberfläche des Formwerkzeugs aufgebracht wird und so eine Beschichtungsmittelschicht bildet,
(C)auf die gegebenenfalls abgelüftete Beschichtungsmittelschicht ein Vorformling aus einer oder mehrerer Lagen aus Fasern oder Faserverbünden gelegt wird, wobei der Vorformling vor dem Einlegen mit dem eine Kunststoffmatrix bildenden Kunststoff getränkt wird, diese Kunststoffmatrix vorzugsweise vorgetrocknet und gegebenenfalls teilweise gehärtet wird,
(D)das Formwerkzeug geschlossen wird und die Beschichtungsmittelschicht zusammen mit dem in der Kunststoffmatrix eingebetten Vorformling gehärtet wird, und
anschließend der beschichtete faserverstärkte Kunststoff entnommen wird.

Das beschichtete Bauteil aus dem faserverstärkten Kunststoff kann, wenn gewünscht, ohne Schleifvorgang, gegebenenfalls nach einer einfachen Reinigung, direkt mit weiteren Beschichtungsmitteln wie beispielsweise einem oder mehreren Basislacklacken und einem oder mehreren Klarlacken unter Ausbildung einer oder mehrerer Basislackschichten beziehungsweise einer oder mehrerer Klarlackschichten beschichtet werden. Vorzugsweise wird auf den erfindungsgemäß beschichteten faserverstärkten Kunststoff keine Füllerschicht aufgebracht, sondern direkt eine Basislackschicht oder eine Decklackschicht, insbesondere eine Klarlackschicht.

Als Basislacke und Decklacke, insbesondere Klarlacke können prinzipiell alle konventionell in der Serienlackierung oder Reparaturlackierung eingesetzten Basislacke beziehungsweise Klarlacke verwendet werden. Derartige Basislacke und Klarlacke sind beispielsweise von der BASF Coatings GmbH erhältlich, wobei sich als Klarlacke insbesondere Klarlacke der EverGloss-Produktlinie besonders bewährt haben.

Typische und bevorzugte Bauteile aus faserverstärkten Kunststoffen sind Karosserieteile von Kraftfahrzeugen. Die Erfindung ist jedoch keineswegs auf die Beschichtung von Karosserieteilen von Kraftfahrzeugen beschränkt. Vielmehr können alle faserverstärkten Kunststoffe beziehungsweise Bauteile daraus zur Beschichtung im erfindungsgemäßen Verfahren verwendet werden, insbesondere wenn diese für Anwendungsbereiche vorgesehen sind, in welchen sehr hochwertige Lackierungen, vor allem Class-A-Oberflächen gefordert sind.

### Verwendung der erfindungsgemäßen Beschichtungsmittel

Weiterer Gegenstand der vorliegenden Erfindung ist die Verwendung der erfindungsgemäßen Zweikomponenten-Beschichtungsmittelzusammensetzungen zur Beschichtung von Schaumstoffen und faserverstärkten Kunststoffen beziehungsweise der Bauteile daraus.

Im Folgenden wird die Erfindung durch Beispiele verdeutlicht.

### BEISPIELE

### 2K-Beschichtungsmittelzusammensetzungen: Beispiele 1 und 2

Alle Angaben in Tabelle 1 sind Angaben in Gewichtsteilen. Die Bestandteile in Stammlack-Komponente A und Härter-Komponente B addieren sich jeweils zu 100 Gewichtsteilen. Vor der Verwendung wurden Stammlack-Komponente A und Härter-Komponente B im angegebenen Gewichtsverhältnis miteinander homogen vermischt. Alle eingesetzten Komponenten sind als lösemittelfreie Komponenten angegeben (100 % Festkörper). Eventuell in diesen Produkten enthaltene Lösemittel sind der Komponente "Lösemittel" zugeordnet.

Bei der Herstellung der Stammlack-Komponente A der Beispiele 1 bis 3 wurden die Bestandteile A1a und A2a vorgelegt und die weiteren Bestandteile unter Rühren zugemischt (Mischungsdauer 10 min bei einer Temperatur von 20 bis 35 °C). Anschließend wurde der Stammlack filtriert und abgefüllt.

Stammlack-Komponente A und Härter-Komponente B wurden erst kurz vor der Applikation im oben angegebenen Gewichtsverhältnis wie unten beschrieben homogen im Mischkopf der Anlage vermischt und auf Applikationsviskosität (Spritzviskosität) eingestellt.

**Tabelle 1**

| | Beispiel 1 (Gew.-Teile) | Beispiel 2 (Gew.-Teile) |
|---|---|---|
| *Stammlack-Komponente A* | | |
| A1a | 9,4 | 23,9 |
| A1b | 17,9 | - |
| A2a | 1,4 | 8,5 |
| A2b | 0,9 | - |
| A2c | - | 6,2 |
| A3 | 3,7 | 4,6 |
| A4a | 0,7 | 2,3 |
| A5 | 1,5 | 1,8 |
| A6 | 8,0 | 20,2 |
| A7a | - | 0,3 |
| A7b | 1,0 | 2,6 |
| A7c | 0,3 | 0,8 |
| A7d | 0,01 | 0,05 |
| A7e | - | 0,01 |
| A7f | 0,3 | - |
| Lösemittel | 54,89 | 28,74 |
| | | |

| *Härter-Komponente B* | | |
|---|---|---|
| B1 | 37,0 | 37,0 |
| | | |
| *Gewichtsverhältnis von Festkörper Stammlack A zu Festkörper Härter B* | 1,22:1 | 1,93:1 |
| *Molverhältnis OH (Stammlack A) zu NCO (Härter B)* | ca. 1:1,2 | ca. 1:2,4 |

- A1a:: hydroxyfunktionelles Poly(meth)acrylat mit einer Hydroxylzahl von 83 mg KOH/g, einem Mₙ von ca. 6800 g/mol und einem M_{w} von ca. 17000 g/mol
- A1b:: hydroxyfunktionelles Poly(meth)acrylat mit einer Hydroxylzahl von 66 mg KOH/g,
- A2a:: schwach verzweigtes, aromatisches Polyesterpolyol mit einer Hydroxylzahl von 142 mg KOH/g
- A2b:: lineares, aliphatisches Polyesterpolyol mit einer Hydroxylzahl von 43 mg KOH/g
- A2c:: verzweigtes, aliphatisches Polyesterpolyol mit einer Hydroxylzahl von ca. 220 mg KOH/g, einer Säurezahl von ca. 11 mg KOH/g, einem Mₙ von ca. 1900 g/mol und einem M_{w} von ca. 7500 g/mol
- A3:: Mischung von Verbindungen der Formel R²-(C=O)ᵣ-O-(AO)ₛ-R³ aus (a) R² = Mischung gesättigter und ungesättigter Kohlenwasserstoffreste mit 12 bis 22 Kohlenstoffatomen, r = 0, AO = Mischung aus hauptsächlich Ethylenoxid- und wenig Propylenoxid-Einheiten und R³ = H (Mₙ ≈ 650 g/mol); und (b) R² = ungesättigter Kohlenwasserstoffrest mit 21 Kohlenstoffatomen, s = 0 und R³ = H
- A4a:: Dioctylzinndilaurat
- A5:: polyethermodifiziertes Methylpolysiloxan
- A6:: Rutil-Pigment
- A7a:: UV-Absorber
- A7b:: handelsübliches Verdickungsmittel
- A7c:: handelsübliches Verlaufmittel
- A7d:: PUR-Beschleuniger
- A7e:: Aktivator
- A7f:: Ethylen-bis-3-mercaptoprorionat (Reaktionsverzögerer)
- B1:: Hexamethylendiisocyanat-Trimer des Isocyanurat-Typs mit einem NCO-Gehalt von 11 Gew.-%

### Beschichtung von Schaumstoffen

Die Raumtemperatur aufweisenden Beschichtungsmittelzusammensetzungen der Beispiele 1 und 2 wurden mittels Spritzapplikation (Fließbecherpistole der Firma Sata; Düse 1,3; Spritzdruck 1-2 bar) in die obere und untere Form eines vorgeheizten Formwerkzeug eingebracht (Temperatur des Formwerkzeugs für Weichschaum 30°C und für Hartschaum 80 °C).

Nach 30 s Ablüften wurde ein 2K-Polyurethanschaum bei Raumtemperatur über einen Mischkopf in das Formwerkzeug gedrückt. Das Formwerkzeug wurde für 3 bis 10 min geschlossen. Zusätzlicher Druck wurde nicht beaufschlagt. Die Reaktionstemperatur die bei der Schaumbildung erreicht wird liegt im Bereich von 80 bis 100 °C und führte zu einer gleichzeitigen Härtung des Beschichtungsmittels.

Die erfindungsgemäß beschichteten Schaumstoff-Formteile lassen sich bei Bedarf ohne aufwändigen Reinigungsprozess oder Schleifprozesse nachbeschichten. Nach einem Transport oder längerer Lagerung empfiehlt es sich jedoch die beschichteten Formteile einfach unter Verwendung eines handelsüblichen Kunststoffreinigers oder Isopropanol abzuwischen. Weitere Vorbehandlungen sind nicht nötig.

Im Anschluss wurde das Bauteil mit einem Decklack (460-80 RAL 5012) beschichtet. Der Decklack wurde nach Herstellerangaben gehärtet.

Die beschichteten Schaumstoffe wurden folgenden Lagerbedingungen (12 h bei 23 °C, 120 h bei 70 °C, 264 h bei 70 °C und anschließend 72 Stunden bei 55 °C (93 % relative Luftfeuchte) ausgesetzt und mittels des Gitterschnitt-Tests gemäß DIN EN ISO 2409 (2013-06; DE) überprüft. Alle Ergebnisse zeigten eine gute Haftung.

Nach den Lagerversuchen wurde das Bauteil mit einem Hochdruckreiniger (ca. 200 bar) wassergestrahlt, um eine extreme Belastung zu simulieren. Auch der nachfolgende Gitterschnitttest bestätigte die gute Haftung.

Des Weiteren wurde die UV-Beständigkeit unter Verwendung einer Xenon-Lampe (Atlas Suntest CPS+) über 80 h, Stufen 1 bis 8 in Anlehnung an DIN EN ISO 105-B02 geprüft, mit der besten Einstufung der Stufe 8. Ein weiterer UV-Test erfolgte mittels einer Hanaulampe über einen Zeitraum von 72h, Stufen 1 bis 5 in Anlehnung an DIN EN 20105-A02, mit der besten Einstufung der Stufe 5. Die UV-Beständigkeit der Beschichtungen ist somit gewährleistet.

### Beschichtung eines faserverstärkten Formteils (am Beispiel eines Epoxy-Vorformlings)

Das auf etwa 150 °C vorgeheizte Formwerkzeug wurde geöffnet und mit einer erfindungsgemäßen Beschichtungsmittelzusammensetzung im Sprühauftrag beschichtet. Anschließend wurde die Beschichtungsmittelzusammensetzung abgelüftet (Trockenfilmdicke ca. 50 bis 200 µm), ein Glasfaser- oder Carbonfaser-Epoxy-Vorformling wurde eingelegt und das Formwerkzeug (bei einer Formträger-Temperatur zwischen 100 und 150 °C gehärtet. Das beschichtete Formteil ließ sich problemlos und rückstandsfrei entformen.

Die erfindungsgemäß beschichteten Formteile lassen sich bei Bedarf ohne aufwändigen Reinigungsprozess oder Schleifprozesse nachbeschichten. Nach einem Transport oder längerer Lagerung empfiehlt es sich jedoch die beschichteten Formteile einfach unter Verwendung eines handelsüblichen Kunststoffreinigers abzuwischen. Weitere Vorbehandlungen sind nicht nötig.

Das faserverstärkte, erfindungsgemäß beschichtete Formteil kann beispielsweise mit einem handelsüblichen Standard-Reparatur-Basislack sowie einem Klarlack nachbeschichtet werden.

## Patentansprüche

1. Lösemittelbasierte Zweikomponenten-Beschichtungsmittelzusammensetzung, welche eine Stammlack-Komponente A umfasst, enthaltend
A1 eine Poly(meth)acrylat-Komponente, die eines oder mehrere hydroxyfunktionelle Poly(meth)acrylate A1a mit einer Hydroxylzahl von 50 bis 120 mg KOH/g enthält;
A2 eine Polyesterpolyol-Komponente, die eines oder mehrere aromatische, verzweigte Polyesterpolyole A2a, mit einer Hydroxylzahl von 100 bis 200 mg KOH/g enthält;
A3 eine oder mehrere Spezies der allgemeinen Formel (I)
R²-(C=O)ᵣ-O-(AO)ₛ-R³ (I)
enthält,
worin R² ein gesättigter oder ungesättigter, aliphatischer Kohlenwasserstoffrest mit 6 bis 30 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30 ist;
A4 einen oder mehrere Vernetzungskatalysatoren A4a gewählt aus der Gruppe der Organozinnverbindungen enthält,
A5 eines oder mehrere polyethermodifizierte Alkylpolysiloxane A5;
und wobei die Zweikomponenten-Beschichtungsmittelzusammensetzung Härter-Komponente B umfasst, enthaltend
B1 eines oder mehrere Polyisocyanate, welche im Mittel 2,4 bis 5 NCO-Gruppen aufweisen; und
wobei das molare Verhältnis der Summe der Hydroxylgruppen der Stammlack-Komponenten A1 und A2 zu den NCO-Gruppen der Härter-Komponente B von 1:3,5 bis 1:1,0 beträgt.

2. Lösemittelbasierte Zweikomponenten-Beschichtungsmittelzusammensetzung gemäß Anspruch 1, worin das oder die hydroxyfunktionelle Poly(meth)acrylate A1a einer Hydroxylzahl von 65 bis 100 mg KOH/g besitzen.

3. Lösemittelbasierte Zweikomponenten-Beschichtungsmittelzusammensetzung gemäß Anspruch 1 oder 2, worin das oder die aromatischen, verzweigten Polyesterpolyole A2a eine Hydroxylzahl von 110 bis 180 mg KOH/g besitzen.

4. Lösemittelbasierte Zweikomponenten-Beschichtungsmittelzusammensetzung gemäß einem der Ansprüche 1 bis 3, wobei in der oder den Spezies A3 der allgemeinen Formel (I)
R² für einen gesättigten oder ungesättigten, aliphatischen Kohlenwasserstoffrest mit 10 bis 24 Kohlenstoffatomen steht,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid und Propylenoxid steht, r = 0 oder 1 ist, und
s = 0 oder 1 bis 25 ist.

5. Lösemittelbasierte Zweikomponenten-Beschichtungsmittelzusammensetzung gemäß einem der Ansprüche 1 bis 4, worin der oder die Vernetzungskatalysatoren A4a gewählt werden aus der Gruppe der Dialkylzinndicarboxylate und Dialkylzinndimercaptide.

6. Lösemittelbasierte Zweikomponenten-Beschichtungsmittelzusammensetzung gemäß einem der Ansprüche 1 bis 5, worin das oder die polyethermodifizierten Alkylpolysiloxane A5 polyethermodifizierte Methylpolysiloxane sind.

7. Lösemittelbasierte Zweikomponenten-Beschichtungsmittelzusammensetzung gemäß einem der Ansprüche 1 bis 6, worin das oder die aliphatischen Polyisocyanate B1 Trimere und/oder Tetramere von Diisocyanaten sind, und die Trimere und/oder Tetramere gewählt sind aus der Gruppe der Iminooxadiazindione, Isocyanurate, Allophanate und Biurete.

8. Lösemittelbasierte Zweikomponenten-Beschichtungsmittelzusammensetzung gemäß einem der Ansprüche 1 bis 7, wobei
der Anteil der Bestandteile der Poly(meth)acrylat-Komponente A1 bezogen auf die Gewichtssumme der Bestandteile der der Poly(meth)acrylat-Komponente A1 und der Polyesterpolyol-Komponente A2 mehr als 50 Gew.-% beträgt;
der Anteil an hydroxyfunktionellen Poly(meth)acrylaten A1a in Bezug auf die Gewichtssumme der hydroxyfunktionellen Poly(meth)acrylate A1a und der aromatischen, verzweigten Polyesterpolyole A2a mehr als 65 Gew.-% beträgt;
die Gesamtheit der Spezies A3, bezogen auf das Gesamtgewicht der Stammlack-Komponente A, 1 bis 7 Gew.-%, beträgt;
die Gesamtheit der Vernetzungskatalysatoren A4a, bezogen auf das Gesamtgewicht der Stammlack-Komponente A, 0,15 bis 5,0 Gew.-% beträgt;
die Gesamtheit der polyethermodifizierten Alkylpolysiloxane A,5 bezogen auf das Gesamtgewicht der Stammlack-Komponente A, 0,5 bis 5 Gew.-% beträgt.

9. Zusammensetzung als Hauptbestandteile enthaltend oder bestehend aus der oder den Spezies A3 wie sie in Anspruch 1 oder 4 definiert ist und dem oder den polyethermodifizierten Alkylpolysiloxanen A5 wie sie in Ansprüchen 1 oder 6 definiert sind.

10. Zusammensetzung gemäß Anspruch 9, wobei es sich um ein Entformungsmittel oder Entformungsadditiv handelt.

11. Verwendung der Zusammensetzung wie sie in Ansprüchen 9 und 10 definiert ist als Entformungsmittel in einer Zweikomponenten-Beschichtungsmittelzusammensetzung, wobei die Zweikomponenten-Beschichtungsmittelzusammensetzung mindestens eine Poly(meth)acrylat-Komponente A1, mindestens eine Polyesterpolyol-Komponente A2, mindestens einen Vernetzungskatalysator A4a, und mindestens eine Härter-Komponente B, umfasst, wobei A1, A2, A4a und B wie in Ansprüchen 1 bis 3, 5 oder 7 definiert sind.

12. Verfahren zur Herstellung eines beschichteten faserverstärkten Kunststoffs, wobei
(A) ein Formwerkzeug auf eine Temperatur von 100 bis 160 °C erhitzt wird,
(B) das Formwerkzeug geöffnet wird und eine lösemittelbasierte Zweikomponenten-Beschichtungsmittelzusammensetzung wie sie in den Ansprüchen 1 bis 8 definiert ist, auf mindestens eine Oberfläche des Formwerkzeugs aufgebracht wird und so eine Beschichtungsmittelschicht bildet,
(C) auf die gegebenenfalls abgelüftete Beschichtungsmittelschicht ein Vorformling aus einer oder mehrerer Lagen aus Fasern oder Faserverbünden gelegt wird, wobei der Vorformling vor dem Einlegen mit dem eine Kunststoffmatrix bildenden Kunststoff getränkt wird, diese Kunststoffmatrix vorzugsweise vorgetrocknet und gegebenenfalls teilweise gehärtet wird,
(D) das Formwerkzeug geschlossen wird und die Beschichtungsmittelschicht zusammen mit dem in der Kunststoffmatrix eingebetten Vorformling gehärtet wird, und
(E) anschließend der beschichtete faserverstärkte Kunststoff entnommen wird.

13. Verfahren zur Herstellung eines beschichteten Schaumstoffs, wobei
(A) ein Formwerkzeug auf eine Temperatur von 100 bis 160 °C erhitzt wird
(B) das Formwerkzeug geöffnet wird und eine lösemittelbasierte Zweikomponenten-Beschichtungsmittelzusammensetzung wie sie in den Ansprüchen 1 bis 8 definiert ist, auf mindestens eine Oberfläche des Formwerkzeugs unter Bildung einer Beschichtungsmittelschicht aufgebracht wird und so eine Beschichtungsmittelschicht bildet,
(C)die Beschichtungsmittelschicht vorzugsweise abgelüftet wird,
(D) in offenem oder geschlossenem Verfahren eine einen Polymerschaum bildende Zusammensetzung auf die vorzugsweise abgelüftete Beschichtungsmittelschicht appliziert wird,
(E) die Aufschäumung der den Polymerschaum bildenden Zusammensetzung erfolgt,
(F) der Polymerschaum und die Beschichtungsmittelschicht gemeinsam gehärtet beziehungsweise vernetzt werden
und
(G) anschließend der beschichtete Schaumstoff entnommen wird.

14. Verfahren nach Anspruch 12, wobei der faserverstärkte Kunststoff in Form eines Bauteils vorliegt, vorzugsweise ein Bauteil gewählt aus Karosserieteilen eines Kraftfahrzeugs.

15. Verfahren nach Anspruch 13, wobei der beschichtete Schaumstoff für den Innenbereich oder Außenbereich eines Kraftfahrzeugs, als Schuhsohle oder Möbelpolsterung vorgesehen vorliegt.

16. Verfahren nach einem der Ansprüche 12 bis 15, wobei
die gehärtete Beschichtungsmittelschicht, ohne einen Zwischenschleifvorgang mit einer oder mehreren Basislackschichten und einer oder mehreren Klarlackschichten beschichtet wird und
die Basislackschicht(en) und Klarlackschicht(en) getrennt oder gemeinsam gehärtet werden.

17. Verwendung der Zweikomponenten-Beschichtungsmittelzusammensetzung wie sie in den Ansprüchen 1 bis 8 definiert ist zur Beschichtung faserverstärkter Kunststoffe und/oder zur Beschichtung von Schaumstoffen.
